# EUROPÄISCHE PATENTSCHRIFT

(11) **EP 1 526 305 B1**
(45) Veröffentlichungstag und Bekanntmachung des Hinweises auf die Patenterteilung: **13.02.2008**
(21) Anmeldenummer: 04018795.7
(22) Anmeldetag: 07.08.2004
(51) Int. Cl.: G01P 3/44, F16H 59/38

(54) **Mehrstufiges Schaltgetriebe für eine Brennkraftmaschine**
Multiple ratio gearbox for internal combustion engine
Transmission à engrenages à rapports multiples pour moteur à combustion interne

(30) Priorität: 25.10.2003 DE 10349844
(43) Veröffentlichungstag der Anmeldung: 27.04.2005
(73) Patentinhaber: Dr.Ing. h.c. F. Porsche Aktiengesellschaft, 70435 Stuttgart (DE)
(72) Erfinder: Höbel, Peter, 75242 Neuhausen (DE); Wolk, Klaus, 87600 Kaufbeuren (DE)

(56) Entgegenhaltungen:
- FR-A1- 2 739 672
- GB-A- 2 303 214
- GB-A- 2 312 290
- JP-A- 1 254 401
- JP-A- 7 005 185
- JP-A- 63 166 601
- US-A- 5 209 701
- US-A- 5 263 366

## Beschreibung

Die Erfindung geht aus von einem mehrstufigen Schaltgetriebe für eine Brennkraftmaschine gemäß den Merkmalen des Oberbegriffs des Anspruchs 1.

Aus der DE 100 09 584 A1 ist es ein mehrstufiges Schaltgetriebe mit den Merkmalen des Oberbegriffes des Anspruchs 1 bekannt, bei dem die Getriebeeingangs- und Getriebeausgangsdrehzahl durch Sensoren erfassbar ist.

Zur Erfassung der Drehzahl von rotierenden Motor- oder Getriebebauteilen (siehe z.B. EP 0 872 631 B1) sind sogenannte Geberscheiben bekannt, die mit entsprechenden Zahnsegmenten versehen, am rotierenden Bauteil befestigt sind, während ein gehäusefest installierter Sensor, in unmittelbarer Nähe der Geberscheibe platziert, ein Signal erfasst, das in einem Steuergerät entsprechend dem gewünschten Anwendungszweck verarbeitet wird. Die Getriebewellen, auf denen die Zahnräder für die einzelnen Übersetzungsstufen angeordnet sind, müssen im Getriebegehäuse gelagert werden, wobei zur axialen Festlegung der die Getriebewelle tragenden Zahnräder über entsprechende Befestigungsmittel an der Getriebewelle eine axiale Verspannung des Radsatzes erfolgt.

Aufgabe der Erfindung ist die Ausbildung eines kompakt bauenden Schaltgetriebes, bei dem einzelne Bauteile funktional zusammenfassbar sind.

Dadurch, dass die auf der Getriebeeingangs- und/oder Getriebeausgangswelle angeordnete Geberscheibe zur Drehzahlerfassung gleichzeitig als axiales Sicherungselement für die Getriebewelle bzw. für die auf der Getriebewelle angeordneten Zahnräder ausgebildet ist, kann ein kompakt bauendes Schaltgetriebe umgesetzt werden, dass zudem durch die Funktionsintegration kostengünstiger herstellbar ist.

Durch die in den Unteransprüchen angegebenen Merkmale sind vorteilhafte Weiterbildungen und Ausgestaltungen des mehrstufigen Schaltgetriebes möglich.

Das Sicherungselement ist auf vorteilhafte Art und Weise als Mutter ausgebildet, die auf der Getriebeeingangs- und/oder Getriebeausgangswelle verschraubt ist.

Der auf der Getriebeausgangswelle angeordnete Zahnradsatz ist zwischen zwei Lagerebenen aufgenommen, wobei zur axialen Fixierung der Zahnräder jeweils eine sich aussen an den Lagerebenen abstützende Sicherungsmutter vorgesehen ist, von denen eine gleichzeitig als die Geberscheibe für die Drehzahlerfassung ausgebildet ist.

An die Geberscheibe ist radial ein als Stabelement ausgebildeter Aufnehmer, beispielsweise ein induktiver Sensor oder ein Hall- Sensor, herangeführt, mit dem die Geberscheibe abgetastet wird.

Ein Ausführungsbeispiel der Erfindung ist in der Zeichnung dargestellt und wird im nachfolgenden näher erläutert.

### Es zeigen:

- Fig. 1: einen Längsschnitt durch eine Getriebeanordnung und
- Fig. 2: eine Stirnansicht einer Lagerplatte für die Getriebewellen und
- Fig. 3: eine Seitenansicht der Lagerplatte

Zwei in einem Getriebegehäuse 2 aufgenommene Getriebeeingangswellen 6 und 8 weisen an ihrem einen Ende eine Steckverzahnung 6a und 8a auf, über die sie drehfest mit jeweils einem Kupplungskorb (nicht dargestellt) einer Doppelkupplungsanordnung verbunden sind. Auf der als Hohlwelle ausgebildeten Getriebeeingangswelle 6 sind die Zahnräder 10, 12 und 14 für das Teilgetriebe mit den geraden Gängen angeordnet, die alle als Festzahnräder drehfest mit der Getriebeeingangswelle 6 verbunden sind. Zahnrad 10 bildet dabei den 2. Gang, Zahnrad 12 den 4. Gang und Zahnrad 14 den 6. Gang des Doppelkupplungsgetriebes. Auf der als Vollwelle ausgebildeten und die Hohlwelle 6 tragenden zweiten Getriebeeingangswelle 8 sind die (Fest-) Zahnräder für das Teilgetriebe mit den ungeraden Gängen angeordnet. Dabei bildet Zahnrad 16 den 3. Gang, Zahnrad 18 den 5. Gang und Zahnrad 20 den 1. Gang. Am Ende der Radsatzanordnung ist, durch eine Lagerebene vom Zahnrad 20 für den 1. Gang getrennt, auf der Getriebeeingangswelle 8 noch das Zahnrad 22 für die Ausbildung des Rückwärtsganges angeordnet. Zur Ausbildung der einzelnen Gangstufen sind auf der parallel und im Abstand zu den beiden Getriebeeingangswellen 6, 8 angeordneten Getriebeausgangswelle 24 mit den Zahnrädern 10 bis 22 der Getriebeeingangswellen 6 und 8 kämmend in Eingriff stehende (Los-) Zahnräder 26 bis 38 angeordnet.

Zur Herstellung einer drehfesten Verbindung zwischen Getriebeausgangswelle 24 und den darauf angeordneten (Los-) Zahnrädern 26 bis 38 sind zwischen den Zahnrädern 26 und 28, 30 und 32 sowie 34 und 36 jeweils eine Synchronisiereinheit 40, 42 und 44 angeordnet; analog dazu ist dem (Los-) Zahnrad 38 für den Rückwärtsgang eine Synchronisiereinheit 46 zugeordnet. Die baugleich ausgebildeten Synchronisiereinheiten sind nach der Borg-Warner-Bauart ausgebildet, wobei, wie allgemein bekannt ist, die den Synchronisiereinheiten zugeordneten Synchronringe, solange eine Drehzahldifferenz zwischen Schaltmuffe und dem der Schaltmuffe zugeordneten Zahnrad vorhanden ist, aufgrund des Reibmoments soweit verdreht werden, dass ihre Sperrzähne vor den Schaltklauen der Schaltmuffen liegen und damit das Verschieben der Schaltmuffe verhindern.

Parallel zur Getriebeausgangswelle 24 verlaufend ist eine Schaltachse 48 angeordnet, auf der vier Schaltgabeln 50 längsverschieblich gelagert sind. Die Schaltgabeln 50 greifen dabei mit ihrem gabelförmigen Abschnitt in die den Zahnrädern 26 bis 38 zugeordneten Schaltmuffen der Schaltgabeln 50 ein. Mit Hilfe einer z. B. hydraulischen Ansteuerung der Schaltgabeln 50 wird durch ihre axiale Verschiebung über die Schaltmuffen der Synchronisiereinheiten 40 bis 46 eine drehfeste Verbindung zwischen Getriebeausgangswelle 24 und dem entsprechenden Zahnrad 26 bis 38 hergestellt.

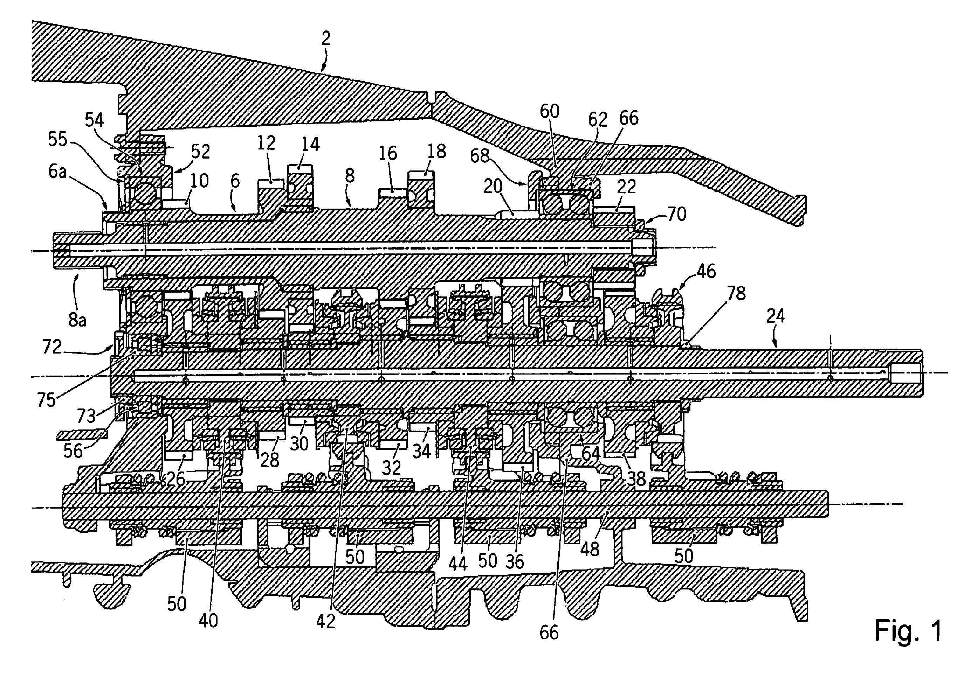

Zur Lagerung der beiden Getriebeeingangwellen 6 und 8, der Getriebeausgangswelle 24 und der Schaltachse 48 ist auf der der Kupplung zugewandten Seite eine Lagerplatte 52 vorgesehen, die als ein erstes gemeinsames Festlager für die Aufnahme bzw. Lagerung der beiden Getriebeeingangswellen 6 und 8, der Getriebeausgangswelle 24 und der Schaltachse 48 vorgesehen ist. Die brillenförmig ausgebildete Lagerplatte 52 ist dabei im Getriebegehäuse 2 verschraubt und weist zwei entsprechende Öffnungen zur Aufnahme der beiden Getriebeeingangswellen 6 und 8 sowie der Getriebeausgangswelle 24 auf. Wie aus Fig. 1 ersichtlich, ist für die Lagerung der beiden Getriebeeingangswellen 6 und 8 ein als Kugellager ausgebildetes erstes Wälzlager 54 vorgesehen, während die Getriebeausgangswelle 24 mit Hilfe eines als Zylinder- Rollenlager ausgebildeten zweiten Wälzlagers 56 in der Lagerplatte 52 aufgenommen ist. Zur axialen Fixierung des Wälzlagers 54 ist ein Sicherungsring 55 vorgesehen, der in einer in der Öffnung der Lagerplatte 52 ausgebildeten Ringnut 57 aufgenommen ist.

Als zweite Lagerebene 60 für die Getriebeeingangswelle 8 und die Getriebeausgangswelle 24 ist jeweils ein Doppel- Kugellager 62 und 64 vorgesehen. Beide Wälzlager 62 und 64 sind in einer aus dem Getriebegehäuse 2 herausgebildeten Lagerstützwand 66 aufgenommen und werden zur axialen Absicherung von einer zweiten Lagerplatte 68 begrenzt, die an der Lagerstützwand 66 verschraubt ist.

Die Getriebeeingangswelle 6 ist an dem dem Rückwärtsgang 22 zugeordneten Ende über eine Mutter 70 axial gesichert; analog dazu ist zur axialen Sicherung für die Getriebeausgangswelle 24 an ihrem der Lagerplatte 52 zugeordneten Ende ebenfalls eine Mutter 72 vorgesehen, die auf der Getriebeausgangswelle 24 verschraubt ist. Der stirnseitige Bund 73 der Mutter 72 kommt dabei am Innenring 75 des als Loslager ausgebildeten Wälzlagers 56 zum Anliegen, wodurch die gewünschte Verspannung der auf der Getriebeausgangswelle 24 angeordneten Bauteile (Zahnräder 26 bis 30, Synchronisiereinheit 40) erfolgt.

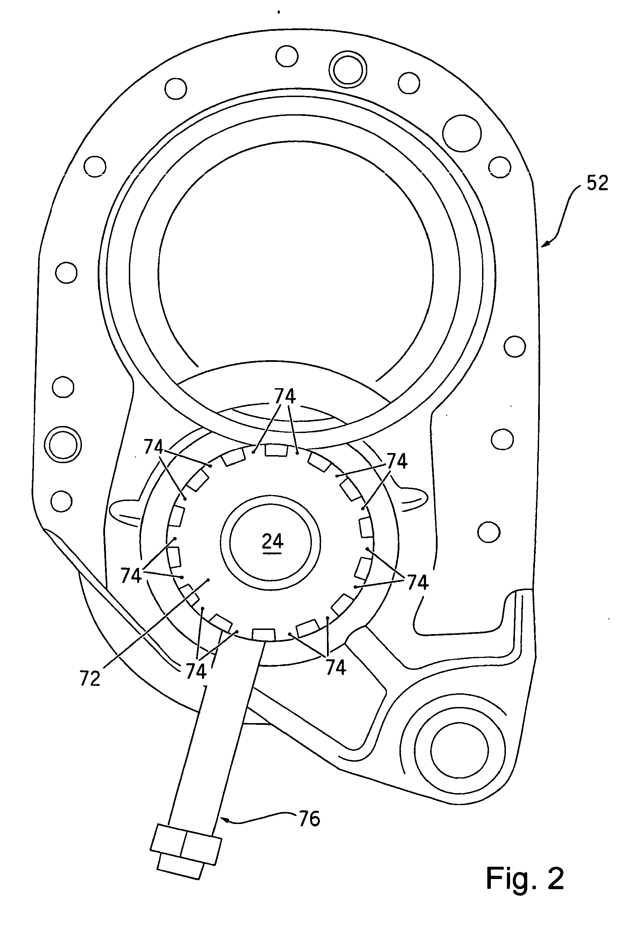

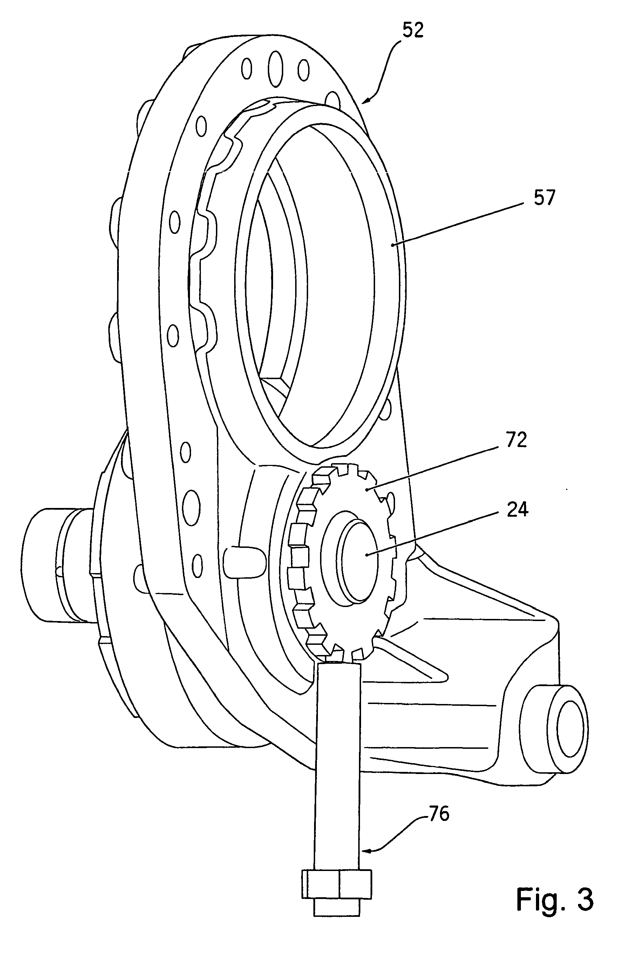

Wie aus Fig. 2 und 3 ersichtlich, ist die Sicherungsmutter 72 mit ihren am Aussenumfang gleichmäßig verteilt ausgebildeten Zahnsegmenten 74 gleichzeitig als eine Geberscheibe für die Drehzahlerfassung der Getriebeausgangswelle 24 ausgebildet. Dazu ist an die Geberscheibe 72 radial ein als Stabelement 76 ausgebildeter Aufnehmer herangeführt, der beispielsweise als induktiver Sensor die in Abhängigkeit von der Drehzahl der Getriebeausgangswelle 24 über die Zahnsegmente 74 der Geberscheibe 72 erzeugten Impulse pro Zeiteinheit erfaßt. Das Stabelement 76 ist dabei am Getriebegehäuse 2 befestigt und über einen entsprechenden elektrischen Anschluss mit einem Steuergerät verbunden.

Eine weitere, neben der Synchronisiereinheit 46 auf der Getriebeausgangswelle 24 vorgesehene Sicherungsmutter 78 bewirkt zusammen mit der gleichzeitig als Geberscheibe ausgebildeten Sicherungsmutter 72 eine axiale Sicherung der Getriebeausgangswelle 24 und sorgt für eine entsprechend abgestimmte axiale Verspannung des auf der Getriebausgangswelle angeordneten Zahnradsatzes.

Die Verwendung der gleichzeitig als Sicherungsmutter ausgebildeten Geberscheibe 72 ist weder auf die zuvor beschriebene Getriebeausführung noch auf die Anbringung auf der Getriebeausgangswelle 24 eingeschränkt, sondern generell zur Sicherung und Drehzahlerfassung von Getriebewellen einsetzbar.

## Patentansprüche

1. Mehrstufiges Schaltgetriebe für eine Brennkraftmaschine, mit mindestens einer Trennkupplung zwischen Motor und Getriebe, einer Getriebeeingangs- und Getriebeausgangswelle, auf denen im Eingriff befindliche Getriebezahnräder zur Erzielung verschiedener Übersetzungsstufen angeordnet sind, wobei die Schaltzahnräder der Getriebe-Zahnradpaarungen über eine Schaltkupplung mit der Getriebewelle in eine kraftschlüssige Verbindung überführbar sind, sowie mit einer auf Getriebeeingangs- und/oder Getriebeausgangswelle angeordneten und mit Zahnsegmenten (74) versehenen Geberscheibe (72) zur Drehzahlerfassung, **dadurch gekennzeichnet, daß** die Geberscheibe (72) gleichzeitig als axiales Sicherungselement für die Getriebeeingangs- und/oder Getriebeausgangswelle (6, 8, 24) bzw. für die darauf angeordneten Zahnräder (26 bis 38) ausgebildet ist.

2. Mehrstufiges Schaltgetriebe nach Anspruch 1, **dadurch gekennzeichnet, dass** die Geberscheibe als Sicherungsmutter (72) ausgebildet ist, die auf der Getriebeeingangs- und/oder Getriebeausgangswelle (6,8, 24) verschraubt ist.

3. Mehrstufiges Schaltgetriebe nach Anspruch 1 oder 2, **dadurch gekennzeichnet, dass** der auf der Getriebeausgangswelle (24) angeordnete Zahnradsatz zwischen zwei Lagerebenen (52, 60) aufgenommen und durch an den beiden Enden des Zahnradsatzes angeordnete Sicherungsmuttern (72, 78) verspannt ist, wobei eine der beiden Sicherungsmuttern gleichzeitig die Geberscheibe (72) zur Drehzahlerfassung ist.

4. Mehrstufiges Schaltgetriebe nach Anspruch 3, **dadurch gekennzeichnet, dass** an die Geberscheibe (72) ein als Stabelement ausgebildeter Aufnehmer (76), beispielsweise ein induktiver Sensor oder ein Hall- Sensor, herangeführt ist, mit dem die Geberscheibe (72) abgetastet wird.

5. Mehrstufiges Schaltgetriebe nach Anspruch 4, **dadurch gekennzeichnet, dass** der Aufnehmer (76) am Getriebegehäuse (2) verschraubt ist.

## Claims

1. Multi-stage shift transmission for an internal combustion engine, having at least one separating clutch between the engine and transmission, having a transmission input and a transmission output shaft on which are arranged transmission gearwheels, which are in engagement, for obtaining different transmission ratio stages, with it being possible for the shift gearwheels of the transmission gearwheel pairs to be moved by means of a shift clutch into a force-fitting connection with the transmission shaft, and having an encoder disc (72) for rotational speed measurement which is arranged on the transmission input and/or transmission output shaft and is provided with tooth segments (74), **characterized in that** the encoder disc (72) is at the same time embodied as an axial securing element for the transmission input and/or transmission output shaft (6, 8, 24) or for the gearwheels (26 to 38) which are arranged thereon.

2. Multi-stage shift transmission according to Claim 1, **characterized in that** the encoder disc is embodied as a securing nut (72) which is screwed to the transmission input and/or transmission output shaft (6, 8, 24).

3. Multi-stage shift transmission according to Claim 1 or 2, **characterized in that** the gearwheel set which is arranged on the transmission output shaft (24) is held, and braced by means of securing nuts (72, 78) which are arranged at the two ends of the gearwheel set, between two bearing planes (52, 60), with one of the two securing nuts at the same time being the encoder disc (72) for rotational speed measurement.

4. Multi-stage shift transmission according to Claim 3, **characterized in that** a pick-up (76) which is embodied as a rod element, for example an inductive sensor or a Hall sensor, is placed close to the encoder disc (72), by means of which pick-up (76) the encoder disc (72) is sensed.

5. Multi-stage shift transmission according to Claim 4, **characterized in that** the pick-up (76) is screwed to the transmission housing (2).

## Revendications

1. Boîte de vitesses à rapports multiples pour un moteur à combustion interne, avec au moins un accouplement de séparation entre le moteur et la boîte de vitesses, un arbre d'entrée de boîte de vitesses et un arbre de sortie de boîte de vitesses, sur lesquels des trains d'engrenages en prise les uns avec les autres sont disposés pour produire différents rapports de transmission, dans laquelle les pignons de vitesse des paires de pignons de boîte de vitesses peuvent être amenés en liaison de complémentarité de force avec l'arbre de boîte de vitesses par un embrayage, ainsi qu'avec un disque de détection (72) disposé sur l'arbre d'entrée et/ou l'arbre de sortie de boîte de vitesses pour la détermination de la vitesse de rotation, **caractérisée en ce que** le disque de détection (72) constitue en même temps un élément de fixation pour l'arbre d'entrée et/ou l'arbre de sortie de boîte de vitesses (6, 8, 24) ou pour les pignons (26 à 38) montés sur ceux-ci.

2. Boîte de vitesses à rapports multiples selon la revendication 1, **caractérisée en ce que** le disque de détection se présente sous la forme d'un écrou de fixation (72), qui est vissé sur l'arbre d'entrée et/ou l'arbre de sortie de boîte de vitesses (6, 8, 24).

3. Boîte de vitesses à rapports multiples selon la revendication 1 ou 2, **caractérisée en ce que** le jeu de pignons monté sur l'arbre de sortie de boîte de vitesses (24) est placé entre deux plans d'appui (52, 60) et est serré par des écrous de fixation (72, 78) disposés aux deux extrémités du jeu de pignons, dans laquelle un des deux écrous de fixation est en même temps le disque de détection (72) pour la détermination de la vitesse de rotation.

4. Boîte de vitesses à rapports multiples selon la revendication 3, **caractérisée en ce qu'**un capteur (76) en forme d'élément de barre, par exemple un capteur par induction ou une sonde de Hall, est approché du disque de détection (72), pour scruter le disque de détection (72).

5. Boîte de vitesses à rapports multiples selon la revendication 4, **caractérisée en ce que** le capteur (76) est vissé sur le carter de boîte de vitesses (2).
